# EUROPEAN PATENT SPECIFICATION

(11) **EP 3 110 137 B1**
(45) Date of publication and mention of the grant of the patent: **07.08.2019**
(21) Application number: 15749320.6
(22) Date of filing: 16.02.2015
(51) Int. Cl.: H04N 5/44, H04N 5/63, H04N 5/445, H04N 5/225, H04N 21/4223, H04N 21/431, H04N 21/443, H04N 7/14

(54) **DISPLAY APPARATUS AND CONTROL METHOD THEREFOR**
ANZEIGEAPPARAT UND ZUGEHÖRIGE KONTROLLMETHODE
APPAREIL D'AFFICHAGE ET SON PROCÉDÉ DE COMMANDE

(30) Priority: 17.02.2014 KR 20140017710
(43) Date of publication of application: 28.12.2016
(73) Proprietor: Samsung Electronics Co., Ltd., Gyeonggi-do 16677 (KR)
(72) Inventor: CHO, Dae-woo, Yongin-si Gyeonggi-do 446-742 (KR); LEE, Sung-han, Hwaseong-si Gyeonggi-do 445-727 (KR)
(74) Representative: Walaski, Jan Filip
(86) International application number: PCT/KR2015/001579
(87) International publication number: WO 2015/122740

(56) References cited:
- EP-A1- 2 056 600
- GB-A- 2 471 145
- JP-A- 2006 270 987
- KR-A- 20020 014 388
- KR-A- 20120 002 512
- KR-A- 20140 005 734
- US-A1- 2012 127 257
- US-B1- 6 812 958
- Samsung: "samsung UHD TV serie 9000 user manual", , 31 December 2013 (2013-12-31), XP055391495, Retrieved from the Internet: URL:https://static.bhphotovideo.com/lit_fi les/95776.pdf [retrieved on 2017-07-17]
- Anonymous: "Amazon.com: Samsung UN65F9000 65-Inch 4K Ultra HD 120Hz 3D Smart LED TV (2013 Model): Electronics", , 21 July 2013 (2013-07-21), XP055391494, Retrieved from the Internet: URL:https://www.amazon.com/dp/B00DV51DYS?_ encoding=UTF8&ref_=de_a_smtd&showDetailTec hData=1#technical-data [retrieved on 2017-07-17]

## Description

### [TECHNICAL FIELD]

The present invention relates to a display apparatus and a control method thereof, and more particularly to a display apparatus having a camera and a control method thereof.

### [BACKGROUND ART]

A television (TV) or the like display apparatus may be provided with a camera for various functions such as taking a picture, making a video call, etc.

The TV camera is installed to the display apparatus and movable up and down for privacy protection, thereby having a structure of being ejected from the display apparatus when it is in use.

For example, if a user needs to use the camera for taking a picture, s/he has to operate the camera to be ejected from the display apparatus and find and execute a camera application among programs provided by the display apparatus. If the display apparatus is not being powered on, it may be more inconvenient for a user since s/he has to turn on the display apparatus, eject the camera, and find and execute a necessary application.

The Samsung UHD TV series 900 user manual relates to a TV having a camera which is installed in the display and movable up and down. EP 2056600A1 relates to a mobile terminal having camera body coupled to the exterior of the terminal body.

### [DISCLOSURE]

### [TECHNICAL PROBLEM]

Accordingly, there is a need of providing various services for allowing a user to intuitively and conveniently use a TV camera and making better use of the camera.

### [TECHNICAL SOLUTION]

According to an aspect of the present invention, there is provided a display apparatus according to claim 1 and a method of controlling a display apparatus according to claim 8.

The foregoing and/or other aspects of the present invention are achieved by providing a display apparatus including: a camera configured to include an image sensor for sensing an image passed through a lens, be mounted to movable up/down on a top of the display apparatus, and be moved up and ejected outward from the display apparatus while being used; an image processor configured to process an image signal corresponding to an image sensed by the image sensor; a display configured to display an image based on the processed image signal; a detector configured to detect whether the camera moves up or down; a power supply configured to supply power to elements of the display apparatus; and a controller configured to control the power supply to turn on the display apparatus if the detector detects that the camera is ejected while the display apparatus is being powered off, and control the image processor to display a preview image corresponding to an image taken by the camera on the display.

The controller may execute a preset program of offering information, and controls the display to additionally display the information offered by the program.

The preset program may include at least one of a weather widget, a clock widget, a traffic information widget, a stock widget and a schedule widget.

The preset program may include at least one application using the camera.

The controller may control the display to display a list of applications including the at least one application using the camera.

The controller may control the power supply to turn off the display apparatus if the detector detects that the camera sinks down.

The controller may determine whether the display apparatus is turned on in response to the ejection of the camera if it is detected that the camera sinks down, and control the display apparatus to be turned off based on the determined result.

The display apparatus may further include a storage in which the list of applications is previously stored.

The foregoing and/or other aspects of the present invention are achieved by providing a method of controlling a display apparatus including a camera mounted to movable up/down on a top of the display apparatus and moved up and ejected outward from the display apparatus while being used, the method including: detecting whether the camera is ejected while the display apparatus is being powered off; turning on the display apparatus; and displaying a preview image corresponding to an image taken by the camera on a display of the display apparatus.

The method may further include executing a preset program of offering information, and displaying the information offered by the program on the display.

The preset program may include at least one of a weather widget, a clock widget, a traffic information widget, a stock widget and a schedule widget.

The method may further include displaying a list of applications including at least one application using the camera.

The method may further include detecting whether the camera sinks down; and turning off the display apparatus.

The method may further include determining whether the display apparatus is turned on in response to the ejection of the camera if it is detected that the camera sinks down; and turning off the display apparatus based on the determined result.

The method further include detecting by a detector whether the camera is ejected while the display apparatus is being powered on; and displaying a list of applications including at least one application using the camera on the display.

### [ADVANTAGEOUS EFFECTS]

According to an embodiment of the present invention, a display apparatus can be easily turned on/off by pushing a camera, be improved in utilization since a user preview image and an information widget are executed when the camera is ejected, and provide more various pieces of information to a user.

Further, a list of applications related to the camera is displayed in response to the ejection of the camera, thereby increasing accessibility to the utilization of the camera and improving convenience of a user.

### [DESCRIPTION OF DRAWINGS]

FIG. 1 illustrates an example of a display apparatus according to an embodiment of the present invention,
FIG. 2 is a block diagram of the display apparatus according to the embodiment of FIG. 1,
FIG. 3 and FIG. 4 are views for explaining a structure where a camera is movable up/down according to an embodiment of the present invention,
FIG. 5 and FIG. 6 illustrate an example that the camera is ejected from a powered-off display apparatus according to an embodiment of the present invention,
FIG. 7 and FIG. 8 illustrate an example that the camera is ejected from a powered-on display apparatus according to an embodiment of the present invention,
FIG. 9 is a flowchart of controlling a display apparatus according to an embodiment of the present invention, and
FIG. 10 is a flowchart of controlling a display apparatus according to another embodiment of the present invention.

*** Reference numerals ***

| | |
|---|---|
| 100 :display apparatus | 110 :video receiver |
| 120 :image processor | 130 :display |
| 140 :camera | 141 :lens |
| 142 :image sensor | 143 :audio receiver |
| 150 :detector | 160 :user input interface |
| 170 :communicator | 175 :storage |
| 180 :power supply | 190 :controller |

### [BEST MODE]

Below, exemplary embodiments will be described in detail with reference to accompanying drawings.

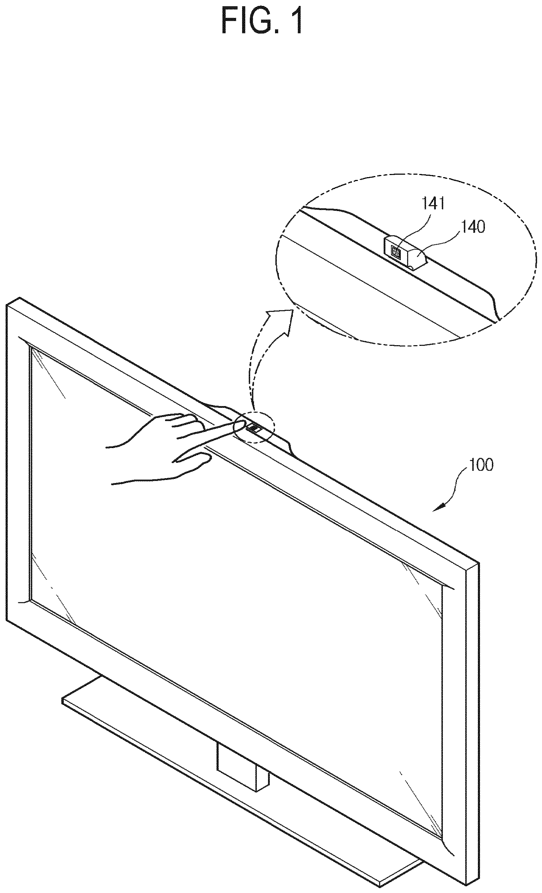

FIG. 1 illustrates an example of a display apparatus 100 according to an embodiment of the present invention,

As shown in FIG. 1, a display apparatus 100 is provided with a camera 140. In this embodiment, the camera 140 is installed on the top of the display apparatus 100 and movable up/down, i.e. elevated up and down. The camera 140 is moved up and ejected outward from the top of the display apparatus 100 when it is used (operated). The display apparatus 100 may be formed with an accommodating space (not shown) at a rear top thereof to accommodate the camera 140 therein when the camera 140 is moved down, i.e. sinks down.

FIG. 1 shows that the camera 140 is installed at the rear top of the display apparatus 100, but not limited thereto. Alternatively, the camera may have any structure as long as it can slide up/down for outward ejection.

The display apparatus 100 according to this embodiment has a structure that the camera 140 is ejected only when it is used, so that a user can intuitively realize whether the camera 140 operates or not. Further, the camera 140 in this exemplary embodiment is operated to supply power to an image sensor 142 and an audio receiver 143 only when it is ejected outward, thereby having a function of protecting a user's privacy.

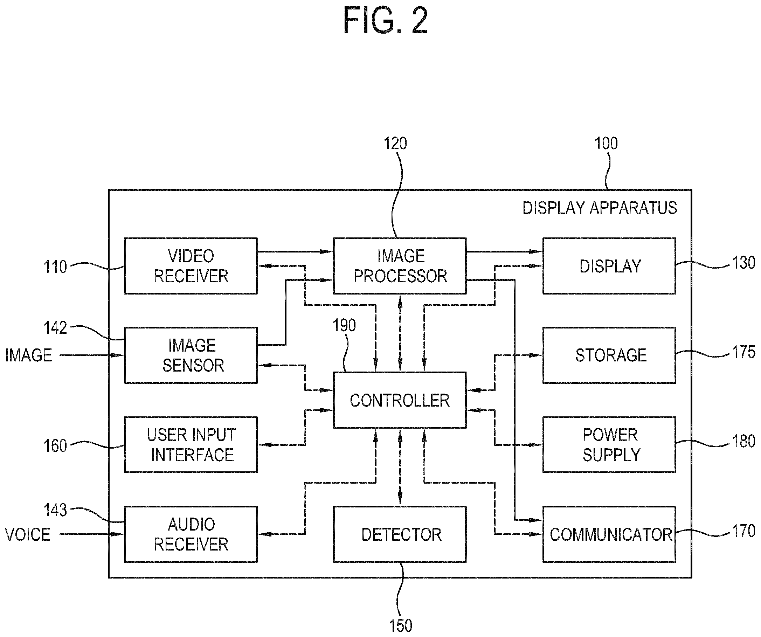

FIG. 2 is a block diagram of the display apparatus according to the embodiment of the present invention.

As shown in FIG. 2, the display apparatus 100 processes a video signal provided from an external image source (not shown) in accordance with a preset image processing process and displays it as an image.

In this embodiment, the display apparatus 100 may be achieved by a television (TV) that displays a broadcast image based on a broadcast signal/broadcast information/broadcast data received from a transmitter of a TV broadcasting station. However, the present inventive concept is not limited to the foregoing display apparatus 100, but may be alternatively applied to various kinds of apparatuses capable of processing an image, e.g. a monitor or the like as well as the TV.

Further, the kind of images displayable on the display apparatus 100 is not limited to the broadcast image. Alternatively, the display apparatus 100 may process images such as a moving image, a still image, an application, an on-screen display, a graphic user interface (GUI) for controlling various operations, etc. based on a signal/data received from various image sources (not shown).

According to an exemplary embodiment, the display apparatus 100 may be achieved by a smart TV. The smart TV is capable of receiving and displaying a broadcast signal in real time, and has a web-browsing function for searching and consuming various contents through Internet while displaying the broadcast signal in real time. To this end, the smart TV offers a convenient environment to a user. Further, the smart TV has an open software platform and thus provides interactive services to a user. Therefore, the smart TV can offer various contents, for example, a program of providing a predetermined service, to a user through the open software platform. Such a program includes an application or widget capable of providing various kinds of service, which may for instance include applications for providing social network services (SNS), finance, news, weather, maps, traffic report, music, movies, games, electronic books, etc. Further, the program in this embodiment includes applications of providing a service for utilizing the camera 140, for example, applications of providing functions of a camera shot, a video call (or an image call), a gallery for looking up the images taken by the camera, a mirror for displaying a preview image of a user, etc.

As shown in FIG. 2, the display apparatus 100 includes a video receiver 110 for receiving a video signal, an image processor 120 for processing the video signal received in the video receiver 110, a display 130 for displaying an image based on the video signal processed by the image processor 120, an image sensor 142 provided inside the camera 140 and sensing an image corresponding to a subject, a detector 150 for detecting whether the camera 140 is moved up/down, a user input interface 160 for receiving a user's input, a communicator 170 for communicating with an external device, a storage 175 for storing data, a power supply 180 for supplying power to the elements of the display apparatus 100, and a controller 190 for controlling the display apparatus 100.

The camera 140 further includes a lens 141 via which an image is projected, and the image sensor 142 senses the image projected through the lens 141. As shown in FIG. 2, the display apparatus 100 according to this embodiment further includes the audio receiver 143 for receiving a user's voice, and the audio receiver 143 may be provided in the camera 140.

In this embodiment, the audio receiver 143 is mounted to the camera 140, but not limited thereto. Alternatively, the audio receiver 143 may be separated from the camera 140 and placed at a predetermined position of the display apparatus 100. Further, the audio receiver 143 may be provided in a device separated from the display apparatus 100, for example, in a remote controller for receiving a user's input. If the audio receiver 143 is provided in the remote controller, the display apparatus 100 receives a user's voice from the remote controller through wireless communication of the communicator 170.

The video receiver 110 receives a video signal and transmits it to the image processor 120. The video receiver 110 may be variously achieved in accordance with the formats of a video signal and the types of the display apparatus 100. For example, the video receiver 110 may wirelessly receive a radio frequency (RF) signal from a broadcasting station (not shown), or may receive an image signal based on composite video, component video, super video, Syndicat des Constructeurs d'Appareils Radiorécepteurs et Téléviseurs (SCART), high definition multimedia interface (HDMI) or the like standards through a wire or a cable. If a video signal is a broadcast signal, the video receiver 110 includes a tuner to be tuned to a channel for receiving a broadcast signal.

Further, the video signal may be received from the external device such as a personal computer (PC), an audio/video (AV) device, a smart phone, a smart pad, etc. In addition, the video signal may be based on data received through Internet or the like network. In this case, the display apparatus 100 may perform network communication through the communicator 170. The video signal may be based on data stored in a flash memory, a hard disk or the like nonvolatile storage 175. The storage 175 may be internally or externally provided in the display apparatus 100. If the storage 175 is externally provided, there may be provided a connector (not shown) to which the storage 175 is connected.

The image processor 120 performs various image processing processes previously set with respect to the image signal. The image processor 120 outputs the processed image signal to the display 130 so that the display 130 can display the image.

There is no limit to the kind of image processing processes performed by the image processor 120. For example, the image processing process may include decoding corresponding to various image formats, de-interlacing, frame refresh rate conversion, scaling, noise reduction for improving picture quality, detail enhancement, line scanning, etc. The image processor 120 may be achieved by an individual group for independently performing each of the processes, or may be achieved by a system-on-chip (SoC) where various functions corresponding to such processes are integrated.

The image processor 120 in this embodiment may further process an image received from the image sensor 142 of the camera 140. Such a processed image is displayed on the display 130.

In this exemplary embodiment, when the camera 140 is ejected from the top by a user's pushing operation, the display apparatus 100 executes the mirror function so that his/her image taken by the camera 140 can be processed by the image processor 120, and the processed image can be displayed as a preview image on the display 130. Further, the display 130 may display the image taken by the camera 140 and processed by the image processor 120, together with an image taken by a camera of the other party and received through the communicator 170, thereby allowing him/her to make a video call.

The display 130 displays an image based on an image signal processed by the image processor 120. There is no limit to the type of display 130. For example, the display 130 may be achieved by liquid crystal, plasma, a light emitting diode (LED), an organic light-emitting diode (OLED), a surface-conduction electron-emitter, a carbon nano-tube (CNT), nano-crystal, or the like various displays.

The display 130 may include additional elements in accordance with its types. For example, if the display 130 is achieved by the liquid crystal display, the display includes a liquid crystal display (LCD) panel (not shown), a backlight unit (not shown) for emitting light to the LCD panel, and a panel driver (not shown) for driving the panel (not shown).

According to an embodiment of the present invention, the display 130 may further display a user interface (UI) with an icon, a text, etc. indicating an operating state (e.g., a standby state or an activated state) of the camera 140, and various programs to be executed in the display apparatus 100.

In addition, the display apparatus 100 according to this embodiment may further include an audio output (e.g. a loudspeaker) for outputting an audio signal divided by the image processor 120.

The image sensor 142 provided in the camera 140 may be achieved by a charge coupled device (CCD)/complementary metal oxide semiconductor (CMOS) image sensor.

The audio receiver 143 receives a voice uttered by a user, and includes a digital or analog microphone (hereinafter, referred to as a microphone).

The audio receiver 143 converts an input voice uttered by a user into an electric audio signal. The converted audio signal is given in the form of a pulse code modulation (PCM) audio waveform or a compressed audio waveform.

If the audio receiver 143 is the analog microphone, the display apparatus 100 may further include a separate audio converter (not shown). This audio converter may be an analog/digital (A/D) converter for converting a user's voice into a digital signal.

In this embodiment, the camera 140 is movable up/down in response to a user's input of pushing the top.

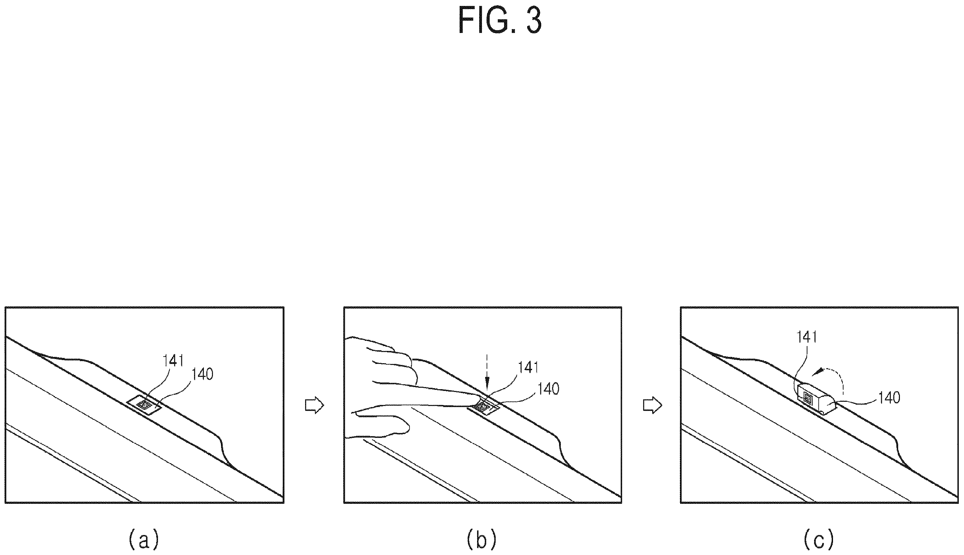

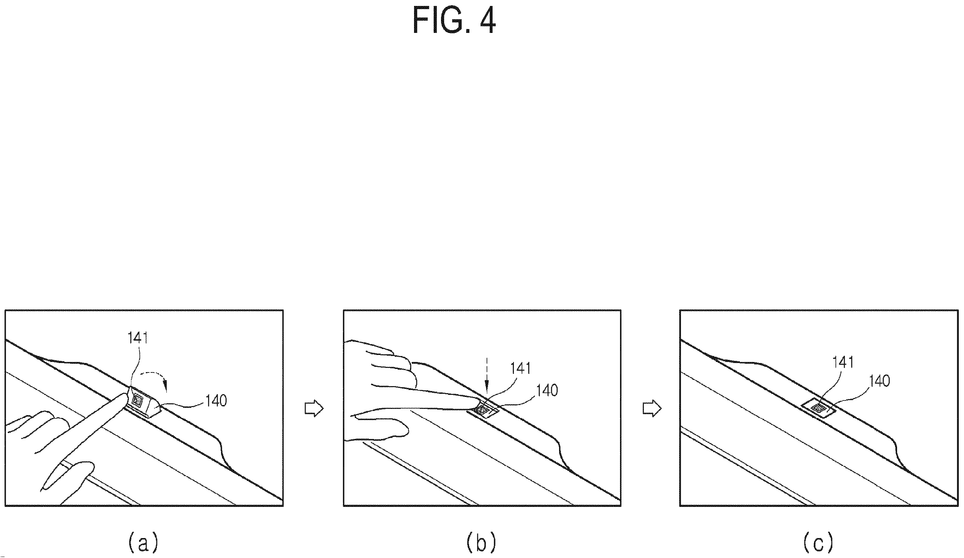

FIG. 3 and FIG. 4 are views for explaining a structure where a camera is movable up/down according to an embodiment of the present invention.

In this exemplary embodiment, a spring or the like elastic member may be coupled to the accommodating space (not shown) in which the camera 140 is accommodated, or to the camera 140, so that the camera 140 may be driven by the elasticity of the elastic member. The elastic member is strengthened and compressed as the camera 140 is moved up/down (elevated up/down).

The camera 140 is moved up/down based on such elasticity in response to a user's push input.

Specifically, as shown in FIG. 3, the camera 140 accommodated and hidden in the accommodating space is moved up and ejected outward in response to a user's push input. As shown in (c) of FIG. 3, the camera 140 may be ejected upward while turning in a predetermined direction, for example, in a counterclockwise direction.

As shown in FIG. 4, the ejected camera is moved down, (i.e. sinks down) and accommodated in the accommodating space in response to another user's push input. As shown in (a) and (b) of FIG. 4, the camera 140 may be accommodated in the display apparatus 100 while turning in a predetermined direction, for example, in a clockwise direction. The accommodating space, in which the camera 140 is accommodated, may be internally provided with a guide member (not shown) along which the camera 140 moving down is guided to slide.

The detector 150 of the display apparatus 100 according to this embodiment may include a switch (not shown) that operates as the camera 140 moves up/down. The switch may output an on/off signal corresponding to the up/down movement of the camera 140.

The detector 150 detects whether the camera 140 moves up or down based on the operation of the switch. The detector 150 detects the ejection of the camera 140 and informs the controller 190 of the detection result. In response to the detection result, the controller 190 may output a signal for activating the image sensor 142 and the audio receiver 143.

Likewise, the detector 150 detects that the camera 140 moves down, and informs the controller 190 of the detection result. In response to the detection result, the controller 190 may output a signal for making the camera 140 and the audio receiver 143 enter the standby state.

The activating state refers to that power is supplied from the power supply 180 (to be described later) to the camera 140 and the audio receiver 143. The standby state refers to that power supplied to the camera 140 and the audio receiver 143 is cut off.

The detector 150 outputs a signal of indicating the standby or activating state to the controller 190 (to be described later), and the controller 190 controls the power supplied from the power supply 180 based on the signal received from the detector 150.

In this embodiment, the switch provided in the detector 150 may be achieved to sense a voltage or use a capacitance sense switch using a conductor, or may be variously achieved by a lug switch, an infrared device, an illuminance sensor, etc.

The user input interface 160 transmits a preset various control command or limitless information to the controller 190 in response to a user's operation and/or input.

In this embodiment, the user input interface 160 may include a keypad (or an input panel, not shown) having numeral keys, menu keys, and the like buttons provided in the display apparatus 100, or may include an input device separated from the display apparatus 100, such as a mouse, a keyboard, a remote control, etc. to generate a preset command/data/information/signal previously set to remotely control the TV and transmit it to the display apparatus 100. The input device is an external device to perform wireless communication with the main body of the display apparatus 100, in which the wireless communication includes Bluetooth, Wi-Fi direct, infrared communication, radio frequency (RF) communication, wireless local area network (WLAN), etc. The input device is operated by a user and transmits a preset command to the display apparatus 100.

The keypad may include physical keypads formed in a front side and/or lateral sides of the display apparatus 100, a virtual keypad displayed on a touch screen of the display 130, and a physical keypad connectable wirelessly. It will be appreciated by a person having an ordinary knowledge in the art that the physical keypad formed in the front side and/or the lateral side of the display apparatus 100 may be excluded in accordance with the performance or structure of the display apparatus 100.

Further, the user input interface 160 may further include a touch sensor (not shown) for sensing a user's touch and/or a motion sensor (not shown) for sensing its own motion caused by a user, which are provided in the remote controller.

In this embodiment, the display apparatus 100 is provided to sense a user's operation, i.e. push input through not only the user input interface 160 but also the detector 150.

The communicator 170 communicates with peripheral devices. In this embodiment, the communicator 170 may include at least one of infrared communication, RF, ZigBee, Bluetooth, Wi-Fi direct, and the like wireless communication modules.

In this embodiment, the communicator 170 may receive an audio signal input to the audio receiver 143 if the audio receiver 143 is provided in the device (e.g., the remote controller) separated from the display apparatus 100. Further, the communicator 170 may transmit a command for turning off the audio receiver 143 provided in the external device when the camera 140 sinks down.

The storage 175 stores data under control of the controller 190, and there is no limit to the kind of data. The storage 175 is achieved by a flash memory, a hard-disc drive and the like nonvolatile storage medium. The storage 175 is accessed by the controller 190, and thus the controller 190 performs reading/ recording/ modifying/ deleting/ updating/ etc.

The data stored in the storage 175 may for example include not only an operating system for operating the display apparatus 100, but also various programs, image data, additional data, etc. executable under the operating system.

The power supply 180 supplies the power to the elements of the display apparatus 100. The power supply 180 receives commercial alternating current (AC) power from the exterior and converts it into power suitable for the elements of the display apparatus 100, thereby supplying the power to the elements. Here, the power supply 180 may be achieved by a switching mode power supply (SMPS).

In this exemplary embodiment, the power supply 180 is provided to supply standby power to the minimum elements such as the detector 150 for sensing whether the camera 140 moves up or down, and some elements of the controller 190 for receiving the detection result of the detector 150, even while the display apparatus 100 is powered off, i.e., in the standby mode. Therefore, the detector 150 operates in a standby mode for receiving a signal to detection whether the camera 140 moves up or down in the power-off state.

The controller 190 performs controls to various elements of the display apparatus 100. For example, the controller 190 controls the image processor 120 to perform image processing processes, and performs control corresponding to a command received from the remote control, thereby controlling the whole operations of the display apparatus 100. The controller 190 may for example be achieved by combination of a central processing unit (CPU) and software.

In this embodiment, the controller 190 may control power supplied from the power supply 180 to the display apparatus 100 in accordance with the detection result of the detector 150.

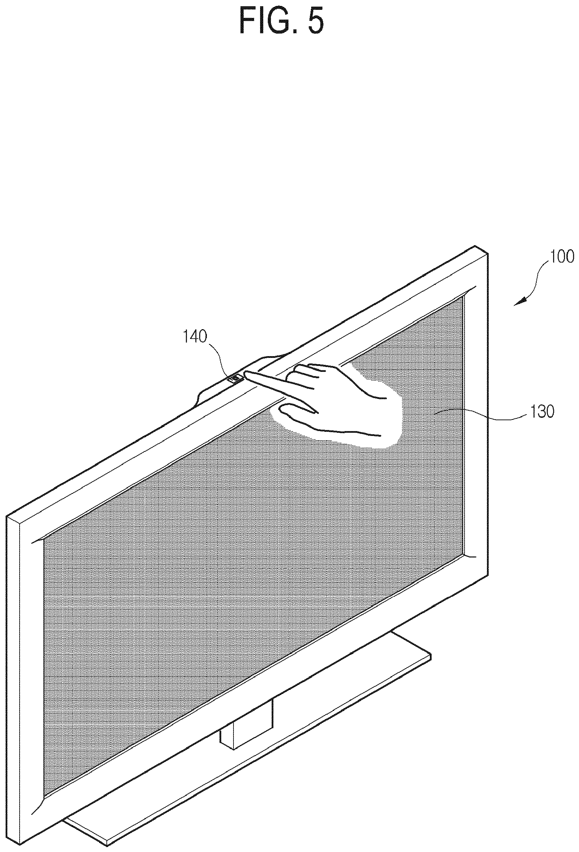

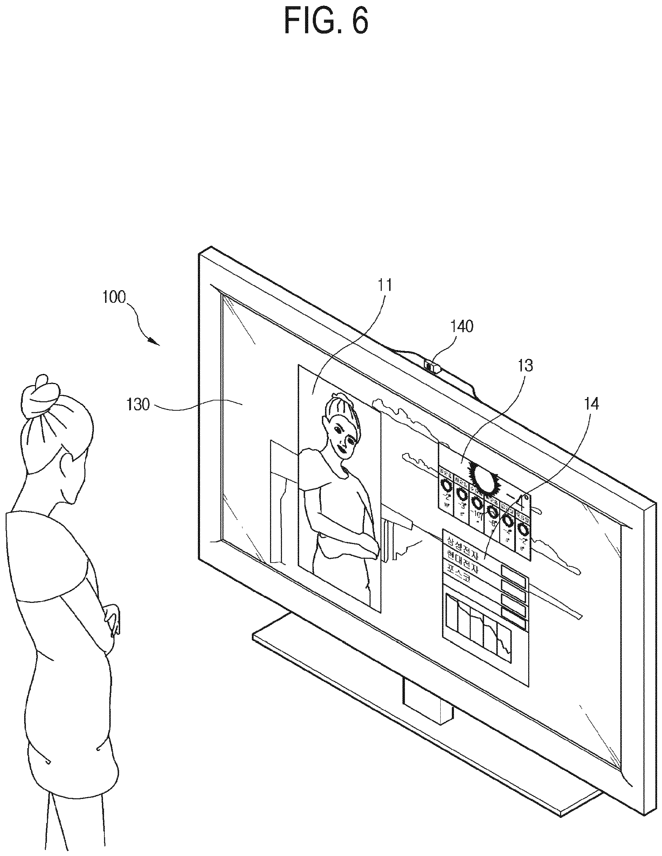

FIG. 5 and FIG. 6 illustrate an example that the camera is ejected from a powered-off display apparatus according to an embodiment of the present invention.

As shown in FIG. 5, a user may make a push input to the camera 140 while the display apparatus 100 is being powered off.

If the detector 150 senses that the camera 140 is ejected, the display apparatus 100 becomes turned on and thus the controller 190 controls the power supply 180 to supply the power to the elements of the display apparatus 100.

As above, if it is detected that the camera 140 is ejected while the display apparatus 100 is being powered off, the controller 190 executes the mirror function and controls the image processor 120 so that a preview image 11 corresponding to an image taken by the camera 140 can be displayed on a certain area of the display 130 as shown in FIG. 6.

Further, the controller 190 may execute a preset program of offering information, and control the display 130 to further display the information offered by the executed program. Here, the preset program may include at least one of a weather widget, a clock widget, a traffic information widget, a stock widget and a schedule widget. FIG. 6 illustrates an example that a weather widget 13 and a stock widget 14 are executed.

In this embodiment, the preset program may further include at least one application employing the camera 140. Here, the controller 190 may control the display 130 to display an application list including at least one application of using the camera 140. Thus, a user can select an application desired to be executed, e.g. a video call application, from the displayed application list, and easily execute a corresponding function.

By the way, if the detector 150 detects that the camera 140 sinks down after the ejection of the camera 140 causes the powered-off display apparatus 100 to be turned on as shown in FIG. 5 and FIG. 6, the controller 190 controls the power supply 180 to turn off the display apparatus 100. Specifically, when the detector 150 detects that the camera 140 sinks down, the controller 190 determines whether the display apparatus 100 is turned on or not in response to the ejection of the camera 140, and controls the display apparatus 100 to be turned off based on the determined result.

According to the embodiment shown in FIG. 5 and FIG. 6, a user can look at her/his image in the preview image 11 by a simple operation of pushing the camera 140 of the display apparatus 100 while s/he is getting ready to go out, and obtain a variety of pieces of information needed for going out through the program. Further, a user who finishes preparation for going out can turn off the display apparatus 100 by the simple operation of pushing the camera 140.

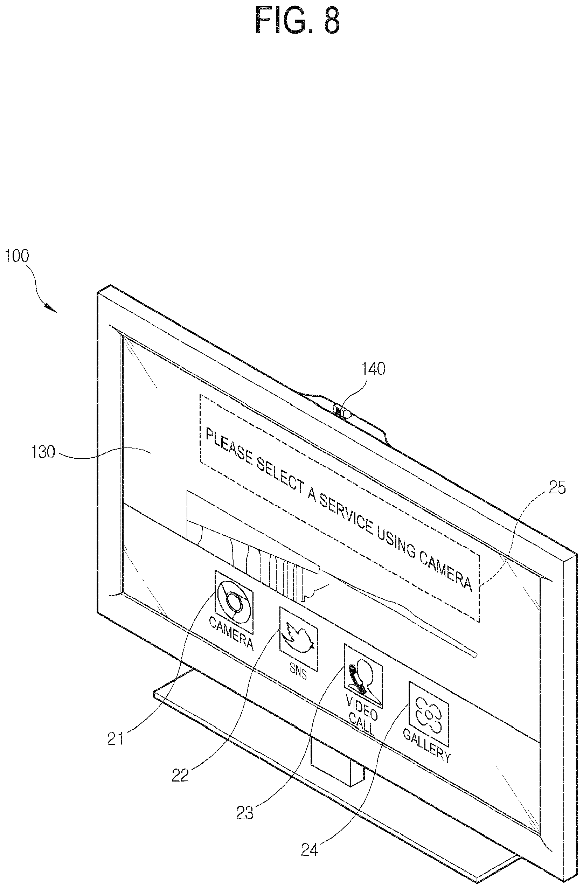

In the embodiment shown in FIG. 5 and FIG. 6, a preview image 21 and information widgets 13 and 14 are displayed in response to the ejection of the camera 140 from the power-off state, but not limited thereto. Alternatively, icons 21, 22, 23 and 24 (see FIG. 8) respectively corresponding to the applications employing the camera 140 may be displayed on the display 130 in response to the ejection of the camera 140 from the power-off state, thereby improving convenience of a user in utilizing the camera 140.

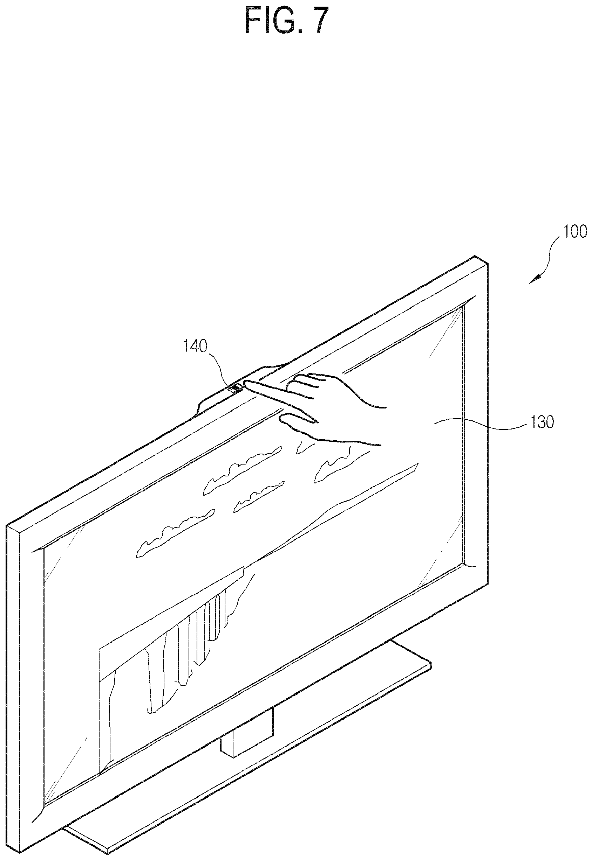

FIG. 7 and FIG. 8 illustrate an example that the camera is ejected from a powered-on display apparatus according to an embodiment of the present invention.

As shown in FIG. 7, a user may make a push input to the camera 140 while the display apparatus 100 is being powered on and displaying an image based on a broadcast signal received from the exterior.

If the detector 150 detects that the camera 140 is ejected, thus the controller 190 may control the display 130 to display the application list including at least one application using the camera 140 by popping up a plurality of corresponding icons 21, 22, 23 and 24. Here, the display 130 may display a user interface (UI) 25 for guiding a user to select an application, and a user interface (not shown) showing a state of an recognition engine using the camera 140, e.g. showing whether to activate the camera.

Thus, a user operates the user input interface 160 to select an application desired to be executed from the displayed application list, for example, to select an icon 21 corresponding to a camera shot, thereby easily executing the corresponding function.

Here, the application list displayed on the display 130 in response to the response to the ejection of the camera 140 may be previously written out and stored in the storage 175.

By the way, if the detector 150 detects that the camera 140 sinks down after the ejection of the camera 140 causes the application using the camera 140 to be executed while the display apparatus 100 is being powered on as shown in FIG. 7 and FIG. 8, the controller 190 controls the display 130 to return a previous screen, for example, to display an image based on a broadcast signal of FIG. 7. Specifically, when the detector 150 detects that the camera 140 sinks down, the controller 190 determines whether the display apparatus 100 is turned on or not in response to not the ejection of the camera 140 but the operation of the user input interface 160, and controls the display 130 to return to the previous screen based on the determined result.

According to the embodiment shown in FIG. 7 and FIG. 8, if a user ejects the camera 140 while the display apparatus 100 is being turned on, for example, while s/he is watching TV, the list of applications using the camera 140 is automatically displayed. Accordingly, there is no need of manually finding and executing a necessary application, and thus it is convenient for user.

In this embodiment shown in FIG. 7 and FIG. 8, the list of applications 21, 22, 23 and 24 are displayed in response to the ejection of the camera 140 during the power-on state, but not limited thereto. Alternatively, an icon corresponding to the mirror function or the information widgets 13 and 14 (see FIG. 6) may be additionally displayed on the display 130 in response to the ejection of the camera 140 during the power-on state, thereby providing improved convenience to a user who is getting ready to go out.

According to an embodiment of the present invention, it is easy and convenient for a user to access a necessary function, service, information, etc. regardless of whether the display apparatus 100 is powered on or off.

Below, a control method of the display apparatus according to an embodiment of the present invention will be described with reference to accompanying drawings.

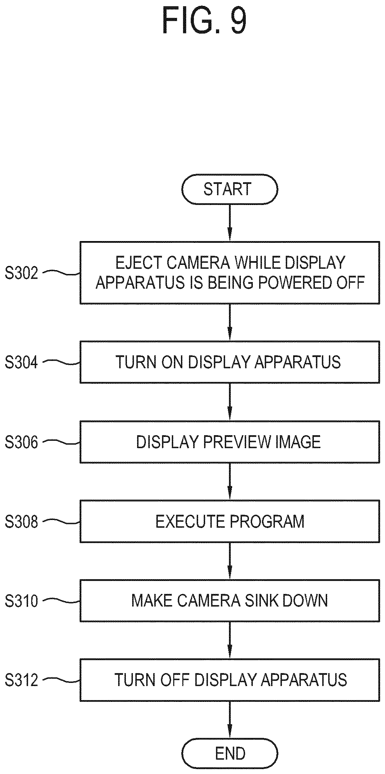

FIG. 9 is a flowchart of controlling a display apparatus according to an embodiment of the present invention

As shown in FIG. 9, the camera 140 may be ejected while the display apparatus 100 is being powered off (S302). Here, the camera 140 may be ejected from the top of the display apparatus 100 in response to a user's push input as shown in FIG. 3.

If the camera 140 is ejected in the operation S302, the powered-off display apparatus 100 is turned on, so that the power can be supplied from the power supply 180 (S304). Accordingly, the power is also supplied to the camera 140, and thus the camera is activated.

The controller 190 controls the display 130 to display the preview image 11 corresponding to an image taken by the activated camera 140 (S306).

Further, the controller 190 executes preset programs 13 and 14, and controls the display 130 additionally display information offered by the programs 13 and 14 (S308). Here, the preset program is the information widget for offering information to a user, and includes at least one of a weather widget, a clock widget, a traffic information widget, a stock widget and a schedule widget. Further, the program may include at least one of applications 21, 22, 23 and 24 using the camera 140 as necessary. At operation S308, the programs 13 and 14 may be optionally executed in response to a user's operation.

The controller 190 may detect by the detector 150 that the camera 140 ejected in the operation S302 sinks down (S310). Here, the camera 140 may sink down inside the display apparatus 100 in response to a user's push input as shown in FIG. 4. Alternatively, a user's push input may be detected in the operation S310 while the preview image 11 is being displayed in the operation S306, without executing the programs 13 and 14 in the operation S308.

If it is detected in operation S310 that the camera 140 sinks down, the controller 190 controls the power supply 180 to turn off the display apparatus 100 since the display apparatus 100 is turned on by the ejection of the camera 140 in the operation S302 (S312).

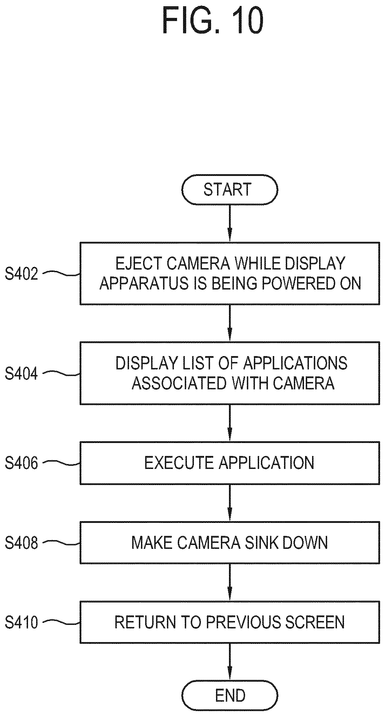

FIG. 10 is a flowchart of controlling a display apparatus according to another embodiment of the present invention.

As shown in FIG. 10, the camera 140 may be ejected while the display apparatus 100 is being powered on, for example is displaying a TV broadcast (S402). Here, the camera 140 may be ejected from the top of the display apparatus 100 in response to a user's push input as shown in FIG. 3.

If the camera 140 is ejected in the operation S402, the controller 190 controls the camera 140 to be activated by supplying the power to the camera 140, and controls the display 130 to display at least one of the applications 21, 22, 23 and 24 associated with the camera 140 (S404). Here, the controller 190 may execute an information widget of offering information to a user, and controls the display 130 to display information offered by the corresponding widget.

A user selects at least one of the applications 21, 22, 23 and 24 displayed in the operation S404, and execute an application desired to be used (S406).

Further, the controller 190 may sense by the detector 150 that the camera 140 ejected in the operation S402 sinks down (S408).

If it is sensed in the operation S408 that the camera 140 sinks down, the controller 190 controls the display 130 to return to a previous screen displayed in the operation S402 since the display apparatus 100 is being turned on and displaying a broadcast in the operation S402 regardless of the ejection of the camera 140 (S412).

According to an embodiment of the present invention, the powered-off display apparatus can be easily turned on/off by pushing the camera, be improved in utilization since a user preview image and an information widget are executed when the camera is ejected, and provide more various pieces of information to a user.

Further, a list of applications associated with the camera is displayed in response to the ejection of the camera, thereby increasing accessibility to the utilization of the camera and improving convenience of a user.

By the way, the foregoing exemplary embodiments may be materialized in a computer-readable recording medium. The computer-readable recording medium includes a transfer medium and a storage medium for storing data readable by a computer system. The transfer medium is materialized by a wired/wireless network to which the computer system is connected.

The foregoing exemplary embodiments may be materialized by hardware and combination between hardware and software. As the hardware, the controller 190 may include a nonvolatile memory in which the software, i.e. a computer program is stored, a RAM to which the computer program stored in the nonvolatile memory is loaded, and a CPU for executing the computer program loaded to the RAM. The nonvolatile memory includes a hard disk drive, a flash memory, a ROM, CD-ROMs, magnetic tapes, a floppy disc, an optical storage, a data transfer device using Internet, etc., but not limited thereto. The nonvolatile memory is a kind of computer-readable recording medium in which a program readable by a computer is recorded.

The computer program is a code that is read and executed by the CPU, and includes codes for performing the operations S302 to S312 and/or the operations S402 to S410 of the controller 190 shown in FIGs. 9 and 10.

The computer program may be included in an operating system provided in the display apparatus 100 or software including an application and/or software interfacing with an external device.

Although a few exemplary embodiments have been shown and described for the invention, it will be appreciated that the invention is not limited to these exemplary embodiments, but, on the contrary, is intended to cover various modifications included within the appended claims.

## Claims

1. A display apparatus comprising:
a camera (140) comprising an image sensor (142) for sensing an image passed through a lens (141),
the camera (140) being mounted to be movable up/down on a top of the display apparatus (100), and
to be moved up and ejected outward from the display apparatus (100) when it is in use;
an image processor (120) configured to process an image signal corresponding to an image taken by the camera (140);
a display (130) configured to display an image based on the processed image signal;
a detector (150) configured to detect movement of the camera (140);
a user input interface (160);
a power supply (180) configured to supply power to elements of the display apparatus (100); and **characterised by**
a controller (190) configured to:
control the power supply (180) to turn on the display (130) of the display apparatus (100), while the display (130) of the display apparatus (100) is powered off, in response to the user input interface (160) receiving a user's input or in response to the detector (150) detecting that the camera (140) moves from the interior of a housing of the display apparatus (100) to project from a surface of the display apparatus (100);
identify, based on the detector (150) detecting that the camera (140) moves to the interior of the housing of the display apparatus (100) while the display (130) of the display apparatus (100) is powered on, whether the display (130) of the display apparatus (100) was turned on in response to the projection of the camera (140) or in response to the user's input;
control the power supply to turn off the display of the display apparatus based on identifying that the display (130) of the display apparatus (100) was turned on in response to the projection of the camera; and
control the display to display, based on identifying that the display (130) of the display apparatus (100) was turned on in response to the user's input, a screen displayed on the display before the camera (140) moves to project from the surface of the display apparatus (100) after the display (130) of the display apparatus (100) was turned on in response to the user's input.

2. The display apparatus according to claim 1, wherein the controller (190) is configured to execute, based on the display (130) of the display apparatus (100) being turned on in response to the projection of the camera, a preset program (13, 14) of offering information, and controls the display (130) to additionally display the information offered by the program.

3. The display apparatus according to claim 2, wherein the preset program (13, 14) comprises at least one of a weather widget, a clock widget, a traffic information widget, a stock widget, a schedule widget and at least one application (21, 22, 23, 24) using the camera (140).

4. The display apparatus according to any one of claims 1 to 3, wherein the controller (190) is configured to control the display (130) to display, based on the display (130) of the display apparatus (100) being turned on in response to the projection of the camera, a list of applications comprising at least one application (21, 22, 23, 24) using the camera (140).

5. The display apparatus according to any one of claims 1 to 3, wherein the controller (190) is configured to control the image processor (120) to display, based on the display (130) of the display apparatus (100) being turned on in response to the projection of the camera, on the display (130), a preview image (11) corresponding to an image taken by the camera (140).

6. The display apparatus according to any one of claims 1 to 3, wherein the display (130) is controlled to display a list of applications including at least one application (21, 22, 23, 24) using the camera (140), based on the detector (150) detecting, while the display (130) of the display apparatus (100) is powered on, that the camera (140) moves to project from the surface of the display apparatus (100).

7. The display apparatus according to claim 6, further comprising a storage (175) in which the list of applications is previously stored.

8. A method of controlling a display apparatus comprising a camera (140) mounted to be movable up/down on a top of the display apparatus (100) and to be moved up and ejected outward from the display apparatus (100) while being used, the method comprising:
receiving or detecting, while a display (130) of the display apparatus (100) is powered off, a user's input or movement of the camera (140) to project from a surface of the display apparatus (100); **characterised by**
turning on the display apparatus (100) based on the received user's input or the detected movement;
identifying, based on detecting movement of the camera (140) to move to the interior of the housing of the display apparatus (100) while the display apparatus (100) is powered on, whether the display apparatus (100) was turned on in response to the projection movement of the camera (140) or in response to the user's input;
turning off the display apparatus based on identifying that the display apparatus (100) was turned on in response to the projection movement of the camera; and
displaying, based on identifying that the display apparatus (100) was turned on in response to the user's input, a screen displayed on the display before the camera (140) moves to project from the surface of the display apparatus (100) after the display apparatus (100) was turned on in response to the user's input.

9. The method according to claim 8, further comprising executing, based on the display apparatus (100) being turned on in response to the projection movement of the camera, a preset program (13, 14) of offering information, and displaying the information offered by the program on the display (130).

10. The method according to claim 9, wherein the preset program (13, 14) comprises at least one of a weather widget, a clock widget, a traffic information widget, a stock widget, a schedule widget and at least one application (21, 22, 23, 24) using the camera (140).

11. The method according to any one of claims 8 to 10, further comprising: displaying, based on the display apparatus (100) being turned on in response to the projection movement of the camera, a list of applications comprising at least one application (21, 22, 23, 24) using the camera (140).

12. The method according to any one of claims 8 to 10, further comprising:
displaying, based on the display apparatus (100) being turned on in response to the projection movement of the camera, a preview image (11) corresponding to an image taken by the camera (140).

13. The method according to any one of claims 8 to 10, further comprising:
detecting, while the display (130) of the display apparatus (100) is powered off, whether the camera (140) moves to project from the surface of the display apparatus (100); and
based on the detected result, displaying, on the display (130), a list of applications including at least one application (21, 22, 23, 24) using the camera (140).

## Patentansprüche

1. Ein Anzeigeapparat, der Folgendes beinhaltet:
eine Kamera (140), die einen Bildsensor (142) zum Erfassen eines durch eine Linse (141) hindurch geführten Bildes beinhaltet,
wobei die Kamera (140) montiert ist, um auf einer Oberseite des Anzeigeapparats (100) nach oben/unten bewegbar zu sein, und
um nach oben bewegt und von dem Anzeigeapparat (100) nach außen gestoßen zu werden, wenn sie verwendet wird;
einen Bildprozessor (120), der konfiguriert ist, um ein Bildsignal zu verarbeiten, das einem von der Kamera (140) aufgenommenen Bild entspricht;
eine Anzeige (130), die konfiguriert ist, um ein Bild basierend auf dem verarbeiteten Bildsignal anzuzeigen;
einen Detektor (150), der konfiguriert ist, um eine Bewegung der Kamera (140) zu detektieren;
eine Benutzereingabeschnittstelle (160);
eine Stromversorgung (180), die konfiguriert ist, um Elemente des Anzeigeapparats (100) mit Strom zu versorgen; und **gekennzeichnet durch**
ein Steuergerät (190), das für Folgendes konfiguriert ist :
Steuern der Stromversorgung (180), um die Anzeige (130) des Anzeigeapparats (100) einzuschalten, während die Anzeige (130) des Anzeigeapparats (100) abgeschaltet ist, als Reaktion darauf, dass die Benutzereingabeschnittstelle (160) eine Benutzereingabe empfängt, oder als Reaktion darauf, dass der Detektor (150) detektiert, dass sich die Kamera (140) von der Innenseite eines Gehäuses des Anzeigeapparats (100) bewegt, um von einer Oberfläche des Anzeigeapparats (100) zu projizieren;
Identifizieren, basierend darauf, dass der Detektor (150) detektiert, dass sich die Kamera (140) zu der Innenseite des Gehäuses des Anzeigeapparats (100) bewegt, während die Anzeige (130) des Anzeigeapparats (100) angeschaltet ist, ob die Anzeige (130) des Anzeigeapparats (100) eingeschaltet war, als Reaktion auf die Projektion der Kamera (140) oder als Reaktion auf die Benutzereingabe;
Steuern der Stromversorgung, um die Anzeige des Anzeigeapparats auszuschalten, basierend auf dem Identifizieren, dass die Anzeige (130) des Anzeigeapparats (100) eingeschaltet war, als Reaktion auf die Projektion der Kamera; und
Steuern der Anzeige, um basierend auf dem Identifizieren, dass die Anzeige (130) des Anzeigeapparats (100) eingeschaltet war, als Reaktion auf die Benutzereingabe, einen auf der Anzeige angezeigten Bildschirm anzuzeigen, bevor sich die Kamera (140) bewegt, um von der Oberfläche des Anzeigeapparats (100) zu projizieren, nachdem die Anzeige (130) des Anzeigeapparats (100) eingeschaltet wurde, als Reaktion auf die Benutzereingabe.

2. Anzeigeapparat gemäß Anspruch 1, wobei das Steuergerät (190) konfiguriert ist, um basierend darauf, dass die Anzeige (130) des Anzeigeapparats (100) eingeschaltet ist, als Reaktion auf die Projektion der Kamera, ein voreingestelltes Programm (13, 14) zum Anbieten von Informationen auszuführen, und die Anzeige (130) steuert, um die von dem Programm angebotenen Informationen zusätzlich anzuzeigen.

3. Anzeigeapparat gemäß Anspruch 2, wobei das voreingestellte Programm (13, 14) mindestens eines von einem Wetter-Widget, einem Uhr-Widget, einem Verkehrsinformations-Widget, einem Stock-Widget, einem Zeitplan-Widget und mindestens eine Anwendung (21, 22, 23, 24), die die Kamera (140) verwendet, beinhaltet.

4. Anzeigeapparat gemäß einem der Ansprüche 1 bis 3, wobei das Steuergerät (190) konfiguriert ist, um die Anzeige (130) zu steuern, um basierend darauf, dass die Anzeige (130) des Anzeigeapparats (100) eingeschaltet ist, als Reaktion auf die Projektion der Kamera, eine Liste von Anwendungen anzuzeigen, die mindestens eine Anwendung (21, 22, 23, 24), die die Kamera (140) verwendet, beinhaltet.

5. Anzeigeapparat gemäß einem der Ansprüche 1 bis 3, wobei das Steuergerät (190) konfiguriert ist, um den Bildprozessor (120) zu steuern, um basierend darauf, dass die Anzeige (130) des Anzeigeapparats (100) eingeschaltet ist, als Reaktion auf die Projektion der Kamera, auf der Anzeige (130) ein Vorschaubild (11) anzuzeigen, das einem von der Kamera (140) aufgenommenen Bild entspricht.

6. Anzeigeapparat gemäß einem der Ansprüche 1 bis 3, wobei die Anzeige (130) gesteuert wird, um eine Liste von Anwendungen zu steuern, die mindestens eine Anwendung (21, 22, 23, 24), die die Kamera (140) verwendet, umfasst, basierend darauf, dass der Detektor (150) detektiert, während die Anzeige (130) des Anzeigeapparats (100) angeschaltet ist, dass sich die Kamera (140) bewegt, um von der Oberfläche des Anzeigeapparats (100) zu projizieren.

7. Anzeigeapparat gemäß Anspruch 6, der ferner einen Speicher (175) beinhaltet, in dem die Liste von Anwendungen vorher gespeichert wird.

8. Ein Verfahren zum Steuern eines Anzeigeapparats, der eine Kamera (140) beinhaltet, die montiert ist, um auf einer Oberseite des Anzeigeapparats (100) nach oben/unten bewegbar zu sein und um nach oben bewegt und von dem Anzeigeapparat (100) nach außen gestoßen zu werden, wenn sie verwendet wird, wobei das Verfahren Folgendes beinhaltet:
Empfangen oder Detektieren, während eine Anzeige (130) des Anzeigeapparats (100) abgeschaltet ist, einer Benutzereingabe oder Bewegung der Kamera (140), um von einer Oberfläche des Anzeigeapparats (100) zu projizieren; **gekennzeichnet durch**
Einschalten des Anzeigeapparats (100) basierend auf der empfangenen Benutzereingabe oder der detektierten Bewegung;
Identifizieren, basierend auf dem Detektieren einer Bewegung der Kamera (140), um sich zu der Innenseite des Gehäuses des Anzeigeapparats (100) zu bewegen, während der Anzeigeapparat (100) angeschaltet ist, ob der Anzeigeapparat (100) eingeschaltet war, als Reaktion auf die Projektionsbewegung der Kamera (140) oder als Reaktion auf die Benutzereingabe;
Ausschalten des Anzeigeapparats basierend auf dem Identifizieren, dass der Anzeigeapparat (100) eingeschaltet war, als Reaktion auf die Projektionsbewegung der Kamera; und
Anzeigen, basierend auf dem Identifizieren, dass der Anzeigeapparat (100) eingeschaltet war, als Reaktion auf die Benutzereingabe, eines auf der Anzeige angezeigten Bildschirms, bevor sich die Kamera (140) bewegt, um von der Oberfläche des Anzeigeapparats (100) zu projizieren, nachdem der Anzeigeapparat (100) eingeschaltet wurde, als Reaktion auf die Benutzereingabe.

9. Verfahren gemäß Anspruch 8, das ferner das Ausführen, basierend darauf, dass der Anzeigeapparat (100) eingeschaltet ist, als Reaktion auf die Projektionsbewegung der Kamera, eines voreingestellten Programms (13,14) zum Anbieten von Informationen und Anzeigen der von dem Programm angebotenen Informationen auf der Anzeige (130) beinhaltet.

10. Verfahren gemäß Anspruch 9, wobei das voreingestellte Programm (13, 14) mindestens eines von einem Wetter-Widget, einem Uhr-Widget, einem Verkehrsinformations-Widget, einem Stock-Widget, einem Zeitplan-Widget und mindestens eine Anwendung (21, 22, 23, 24), die die Kamera (140) verwendet, beinhaltet.

11. Verfahren gemäß einem der Ansprüche 8 bis 10, das ferner Folgendes beinhaltet:
Anzeigen, basierend darauf, dass der Anzeigeapparat (100) eingeschaltet ist, als Reaktion auf die Projektionsbewegung der Kamera, einer Liste von Anwendungen die mindestens eine Anwendung (21, 22, 23, 24), die die Kamera (140) verwendet, beinhaltet.

12. Verfahren gemäß einem der Ansprüche 8 bis 10, das ferner Folgendes beinhaltet:
Anzeigen, basierend darauf, dass der Anzeigeapparat (100) eingeschaltet ist, als Reaktion auf die Projektionsbewegung der Kamera, eines Vorschaubilds (11), das einem von der Kamera (140) aufgenommenen Bild entspricht.

13. Verfahren gemäß einem der Ansprüche 8 bis 10, das ferner Folgendes beinhaltet:
Detektieren, während die Anzeige (130) des Anzeigeapparats (100) abgeschaltet ist, ob sich die Kamera (140) bewegt, um von der Oberfläche des Anzeigeapparats (100) zu projizieren; und
basierend auf dem detektierten Resultat Anzeigen, auf der Anzeige (130), einer Liste von Anwendungen, die mindestens eine Anwendung (21, 22, 23, 24), die die Kamera (140) verwendet, beinhaltet.

## Revendications

1. Appareil d'affichage comprenant :
une caméra (140) comprenant un capteur d'image (142) pour détecter une image passée à travers un objectif (141),
la caméra (140) étant montée pour être déplaçable vers le haut/le bas sur un dessus de l'appareil d'affichage (100), et
pour être déplacée vers le haut et éjectée vers l'extérieur de l'appareil d'affichage (100) quand elle est utilisée ;
un processeur d'image (120) configuré pour traiter un signal d'image correspondant à une image prise par la caméra (140) ;
un afficheur (130) configuré pour afficher une image basée sur le signal d'image traité ;
un détecteur (150) configuré pour détecter un déplacement de la caméra (140) ;
une interface d'entrée d'utilisateur (160) ;
une alimentation électrique (180) configurée pour fournir une puissance à des éléments de l'appareil d'affichage (100) ; et **caractérisé par**
un contrôleur (190) configuré pour :
commander l'alimentation électrique (180) pour allumer l'afficheur (130) de l'appareil d'affichage (100), pendant que l'afficheur (130) de l'appareil d'affichage (100) est hors tension, en réponse à la réception par l'interface d'entrée d'utilisateur (160) d'une entrée d'utilisateur ou en réponse à la détection par le détecteur (150) que la caméra (140) se déplace depuis l'intérieur d'un boîtier de l'appareil d'affichage (100) pour dépasser d'une surface de l'appareil d'affichage (100) ;
identifier, en fonction de la détection par le détecteur (150) que la caméra (140) se déplace vers l'intérieur du boîtier de l'appareil d'affichage (100) pendant que l'afficheur (130) de l'appareil d'affichage (100) est sous tension, si l'afficheur (130) de l'appareil d'affichage (100) a été allumé en réponse au dépassement de la caméra (140) ou en réponse à l'entrée d'utilisateur ;
commander l'alimentation électrique pour éteindre l'afficheur de l'appareil d'affichage lorsqu'il est identifié que l'afficheur (130) de l'appareil d'affichage (100) a été allumé en réponse au dépassement de la caméra ; et
commander l'afficheur pour afficher, quand il est identifié que l'afficheur (130) de l'appareil d'affichage (100) a été allumé en réponse à l'entrée d'utilisateur, un écran affiché sur l'afficheur avant que la caméra (140) se déplace pour dépasser de la surface de l'appareil d'affichage (100) après que l'afficheur (130) de l'appareil d'affichage (100) a été allumé en réponse à l'entrée d'utilisateur.

2. Appareil d'affichage selon la revendication 1, dans lequel le contrôleur (190) est configuré pour exécuter, quand l'afficheur (130) de l'appareil d'affichage (100) est allumé en réponse au dépassement de la caméra, un programme prédéfini (13,14) offrant des informations, et commande l'afficheur (130) pour afficher de plus les informations offertes par le programme.

3. Appareil d'affichage selon la revendication 2, dans lequel le programme prédéfini (13,14) comprend au moins l'un d'un gadget logiciel de météo, d'un gadget logiciel d'horloge, d'un gadget logiciel d'informations de circulation routière, d'un gadget logiciel de bourse, d'un gadget logiciel de calendrier et au moins une application (21,22,23,24) utilisant la caméra (140).

4. Appareil d'affichage selon l'une quelconque des revendications 1 à 3, dans lequel le contrôleur (190) est configuré pour commander l'afficheur (130) afin d'afficher, quand l'afficheur (130) de l'appareil d'affichage (100) est allumé en réponse au dépassement de la caméra, une liste d'applications comprenant au moins une application (21,22,23,24) utilisant la caméra (140).

5. Appareil d'affichage selon l'une quelconque des revendications 1 à 3, dans lequel le contrôleur (190) est configuré pour commander le processeur d'image (120) afin d'afficher, quand l'afficheur (130) de l'appareil d'affichage (100) est allumé en réponse au dépassement de la caméra, sur l'afficheur (130), une image de prévisualisation (11) correspondant à une image prise par la caméra (140).

6. Appareil d'affichage selon l'une quelconque des revendications 1 à 3, dans lequel l'afficheur (130) est commandé pour afficher une liste d'applications comportant au moins une application (21,22,23,24) utilisant la caméra (140), quand le détecteur (150) détecte, quand l'afficheur (130) de l'appareil d'affichage (100) est sous tension, que la caméra (140) se déplace pour dépasser de la surface de l'appareil d'affichage (100).

7. Appareil d'affichage selon la revendication 6, comprenant en outre une mémoire (175) dans laquelle la liste des applications est préalablement mémorisée.

8. Procédé de commande d'un appareil d'affichage comprenant une caméra (140) montée pour être déplaçable vers le haut/bas sur le dessus de l'appareil d'affichage (100) et pour être déplacée vers le haut et éjectée vers l'extérieur de l'appareil d'affichage (100) quand elle est utilisée, le procédé comprenant :
la réception ou la détection, pendant qu'un afficheur (130) de l'appareil d'affichage (100) est hors tension, d'une entrée d'utilisateur ou d'un déplacement de la caméra (140) pour dépasser d'une surface de l'appareil d'affichage (100) ; **caractérisé par**
l'allumage de l'appareil d'affichage (100) suite à l'entrée d'utilisateur reçue ou du déplacement détecté ;
l'identification, suite à la détection d'un déplacement de la caméra (140) pour se déplacer vers l'intérieur du boîtier de l'appareil d'affichage (100) pendant que l'appareil d'affichage (100) est sous tension, si l'appareil d'affichage (100) a été allumé en réponse au déplacement de dépassement de la caméra (140) ou en réponse à l'entrée d'utilisateur ;
l'extinction de l'appareil d'affichage quand il est identifié que l'appareil d'affichage (100) a été allumé en réponse au déplacement de dépassement de la caméra ; et
l'affichage, quand il est identifié que l'appareil d'affichage (100) a été allumé en réponse à l'entrée d'utilisateur, d'un écran affiché sur l'afficheur avant que la caméra (140) se déplace pour dépasser de la surface de l'appareil d'affichage (100) après que l'appareil d'affichage (100) a été allumé en réponse à l'entrée d'utilisateur.

9. Procédé selon la revendication 8, comprenant en outre l'exécution, quand l'appareil d'affichage (100) est allumé en réponse au déplacement de dépassement de la caméra, d'un programme prédéfini (13,14) offrant des informations, et l'affichage des informations offertes par le programme sur l'afficheur (130).

10. Procédé selon la revendication 9, dans lequel le programme prédéfini (13,14) comprend au moins l'un d'un gadget logiciel de météo, d'un gadget logiciel d'horloge, d'un gadget logiciel d'informations de circulation routière, d'un gadget logiciel de bourse, d'un gadget logiciel de calendrier et au moins une application (21,22,23,24) utilisant la caméra (140).

11. Procédé selon l'une quelconque des revendications 8 à 10, comprenant en outre :
l'affichage, quand l'appareil d'affichage (100) est allumé en réponse au déplacement de dépassement de la caméra, d'une liste d'applications comprenant au moins une application (21,22,23,24) utilisant la caméra (140).

12. Procédé selon l'une quelconque des revendications 8 à 10, comprenant en outre :
l'affichage, quand l'appareil d'affichage (100) est allumé en réponse au déplacement de dépassement de la caméra, d'une image de prévisualisation (11) correspondant à une image prise par la caméra (140).

13. Procédé selon l'une quelconque des revendications 8 à 10, comprenant en outre :
la détection, pendant que l'afficheur (130) de l'appareil d'affichage (100) est hors tension, que la caméra (140) se déplace ou non pour dépasser de la surface de l'appareil d'affichage (100) ; et
en fonction du résultat détecté, l'affichage, sur l'afficheur (130), d'une liste d'applications comportant au moins une application (21,22,23,24) utilisant la caméra (140) .
